# FASCICULE DE BREVET EUROPEEN

(11) **EP 3 271 108 B1**
(45) Date de publication et mention de la délivrance du brevet: **16.01.2019**
(21) Numéro de dépôt: 15732862.6
(22) Date de dépôt: 11.06.2015
(51) Int. Cl.: B23P 6/00, B23Q 9/02, B23F 17/00

(54) **PROCÉDÉ DE RÉPARATION DE LA DENTURE D'UNE COURONNE**
VERFAHREN ZUR REPARATUR DER ZÄHNE EINES ZAHNKRANZES
METHOD FOR REPAIRING THE TEETH OF A RING GEAR

(30) Priorité: 17.03.2015 FR 1552195
(43) Date de publication de la demande: 24.01.2018
(73) Titulaire: Fives FCB, 59650 Villeneuve d'Ascq (FR)
(72) Inventeur: CORDIER, Hervé, 59650 Villeneuve D'Ascq (FR); CORDONNIER, Alain, 59650 Villeneuve D'Ascq (FR); RAMAEL, Maxime, 59200 Tourcoing (FR)
(74) Mandataire: Bureau Duthoit Legros Associés
(86) Numéro de dépôt international: PCT/FR2015/051548
(87) Numéro de publication internationale: WO 2016/146899

(56) Documents cités:
- EP-A1- 1 568 439
- CN-A- 1 614 526
- CN-A- 1 936 749
- US-A- 4 662 804
- US-A- 5 161 291
- US-A- 5 233 744

## Description

L'invention est relative à un procédé de réparation de la denture d'une couronne au moyen d'un dispositif d'usinage, ainsi qu'un dispositif d'usinage en tant que tel convenant à la mise en oeuvre du procédé.

Un tel procédé et un tel dispositif sont décrits dans le document EP 1 568 439 A1.

Le domaine de l'invention est celui des machines tournantes de grande taille, bien souvent à axe sensiblement horizontal, telles que rencontrées dans les industries chimique, minérale ou sucrière, munies d'un couronne de grande taille qui permet de les entraîner en rotation par l'intermédiaire d'un pignon et d'un ensemble moteur. On peut citer comme machines tournantes de ce type des fours rotatifs, des broyeurs à boulets, des broyeurs horizontaux à galets, des diffusions de sucrerie...

Avec ces machines, le contact répété entre les dents du pignon et de la couronne est source d'usure, qui peut se présenter sous divers aspects compte tenu du réglage de position relative entre le système d'entraînement dont fait partie le pignon et la machine entraînée, et des divers mouvements de la machine autres que la rotation autour de l'axe. La forme des dents s'écarte du profil d'origine qui était de type épicycloïde, leur épaisseur se réduit et des défauts ponctuels de surface peuvent se former.

Lorsque les surfaces de contact s'écartent du profil idéal, les forces qui s'exercent sur les dentures peuvent s'orienter dans des directions anormales, et des vibrations peuvent apparaître. Ceci induit des sollicitations mécaniques anormales à la fixation de la couronne, à l'ensemble moteur et à la machine elle-même et ses supports, qui peuvent provoquer des dommages aux divers systèmes mécaniques, et également amplifier les phénomènes d'usure des dentures.

Lorsque l'usure a atteint un niveau important, il est nécessaire de réparer ou de remplacer la couronne dentée. L'opération de remplacement est longue et coûteuse pour des machines de grande taille. Etant donné que la machine tournante et la couronne dentée ne tournent que dans un seul sens, le contact du pignon sur la couronne ne s'opère que sur l'un des deux flancs de chaque dent de la couronne. Une alternative est parfois le retournement de la couronne, dans le but d'exposer les autres flancs des dents qui n'ont pas subi d'usure. Cette opération de retournement reste néanmoins une opération lourde, même si elle est un peu moins coûteuse. Il est en général possible de réaliser une réparation pour restituer une qualité de forme des surfaces de contact compatible avec un bon fonctionnement mécanique, et ceci au moins une fois avant que l'on doive retourner ou remplacer la couronne.

Une telle réparation s'effectue sans démontage de la couronne ; seules les pièces de protection sont ôtées pour permettre l'accès aux dentures. Elle consiste en un usinage, généralement par meulage, qui recrée une forme convenable à l'engrènement sur une face de chaque dent de la couronne.

Les opérations de réparation des surfaces de dentures sont aujourd'hui réalisées manuellement par des opérateurs qui manoeuvrent les outils d'usinage ou meulage. Le résultat de l'opération pour chaque dent est évalué par comparaison à un gabarit qui constitue la forme de référence.

Selon l'expérience du demandeur, le résultat final dépend grandement du savoir-faire et de l'expérience de l'opérateur.

Le but de la présente invention est de proposer un procédé de réparation de la denture d'une couronne, adapté pour les couronnes de machines de grande taille, qui ne nécessite pas le démontage de la couronne, et dont le niveau d'automatisation permette la reproductivité de la qualité d'exécution.

L'invention trouvera une application particulière pour usiner des couronnes de diamètre supérieur ou égal à 1,5 mètre.

Un autre but de la présente invention est de proposer un tel procédé dont la mise en place du dispositif d'usinage sur la couronne est opérée simplement et rapidement.

D'autres buts et avantages de l'invention apparaîtront au cours de la description qui va suivre qui n'est donnée qu'à titre indicatif et qui n'a pas pour but de la limiter.

L'invention est relative à un procédé de réparation de la denture d'une couronne au moyen d'un dispositif d'usinage comprenant un châssis et une partie mobile portant un organe de coupe déplaçable suivant plusieurs axes par rapport au châssis, ledit procédé étant mis en oeuvre sur site, sans démontage de la couronne de son support.

Ledit procédé comprend les étapes suivantes, pour la mise en oeuvre de l'usinage d'une dent:
- fixer ledit dispositif d'usinage à la couronne par l'action de serrage de parties solidaires du châssis du dispositif d'usinage, coopérant avec les flancs de la couronne,
- définir la position dudit dispositif d'usinage par rapport à la dent à usiner par appui sur le flanc d'une dent de référence, le flanc étant situé, par rapport au sommet de la dent de référence, de direction opposée au flanc de la dent à usiner, la dent de référence étant la dent à usiner ou encore une dent immédiatement précédente,
- réaliser l'usinage du flanc de la dent à usiner de manière automatisée par la commande de l'organe de coupe selon des opérations d'usinage prédéterminées enregistrées, sous forme numérique, dans une mémoire,
- et dans lequel ladite étape de définition de la position dudit dispositif d'usinage par rapport à la dent à usiner met en oeuvre au moins un premier appui, inférieur, et un deuxième appui, supérieur, de positions décalées en hauteur sur le flanc de la dent de référence.

Selon des caractéristiques optionnelles du procédé selon l'invention, prises seules ou en combinaison :
- le premier appui, inférieur, sur le flanc de la dent de référence est mis en oeuvre par un organe d'appui en appui simultané contre la base de la dent de référence ;
- la dent de référence est la dent à usiner ;
- les opérations d'usinage sont un rabotage par la mise en oeuvre d'un mouvement alternatif de l'organe de coupe ;
- la fixation et le blocage du châssis sur la couronne sont assurés uniquement par l'action de serrage des parties sur les flancs de la couronne ;
- les opérations d'usinage prédéterminées reproduisent un profil de dent d'une denture épicycloïdale.

L'invention comprend également un équipement comprenant un dispositif d'usinage, destiné à l'usinage d'une couronne dentée, convenant pour un usinage sur site, sans démontage de la couronne dentée, ledit dispositif d'usinage comprenant un châssis et une partie mobile portant un organe de coupe, déplaçable suivant plusieurs axes, ledit dispositif comprenant :
- des parties de serrage, solidaires du châssis, aptes à s'étendre de part et d'autre de la couronne, déplaçable par rapport au châssis, et convenant pour fixer et bloquer le châssis par serrage des flancs de la couronne,
- des moyens d'appui sur le flanc d'une dent de référence, situés par rapport au sommet de la dent de référence, de direction opposée au flanc de la dent à usiner, la dent de référence étant la dent à usiner, ou encore une dent immédiatement précédente,
   et dans lequel ledit équipement comprend des moyens de contrôle et de commande aptes à piloter automatiquement l'organe de coupe pour réaliser l'usinage de la dent selon un profil déterminé, comprenant une mémoire dans laquelle sont enregistrées, sous forme numérique, les opérations d'usinage de la dent selon ledit profil déterminé,
- et dans lequel les moyens d'appui sur le flanc de la dent de référence comprennent un premier organe d'appui et un second organe d'appui, destinés à réaliser respectivement un premier appui inférieur, et un deuxième appui supérieur, de positions décalées en hauteur sur le flanc de la dent.

Selon des caractéristiques optionnelles du dispositif selon l'invention, prises seules ou en combinaison :
- le premier appui inférieur est agencé de manière à appuyer simultanément contre la base de la dent ;
- lesdits moyens d'appui sur le flanc d'une dent de référence, sont agencés par rapport au châssis et à l'organe de coupe de manière à coopérer avec la dent à usiner. L'invention sera mieux comprise à la lecture de la description suivante qui n'est donnée qu'à titre indicatif, accompagnée des dessins en annexe parmi lesquels :
- La figure 1 est une vue schématique, de dessus, d'une couronne sur laquelle est fixé le dispositif d'usinage, par serrage des flancs de la couronne,
- La figure 2 est une vue schématique de côté, illustrant la position du dispositif par appui sur le flanc d'une dent de référence.

L'invention concerne un procédé de réparation de la denture d'une couronne 3 au moyen d'un dispositif d'usinage 1, amovible.

Ce dispositif comprend un châssis 11 et une partie mobile 13 portant un organe de coupe 15 déplaçable suivant plusieurs axes par rapport au châssis 11, éventuellement orientable. Le profil de dent à reconstituer peut être celui d'une denture épicycloïdale comprenant des sections d'épicycloïdes.

Avantageusement, ledit procédé selon l'invention est mis en oeuvre sur site, c'est-à-dire sans démontage de la couronne de son support, en particulier sans démontage de la couronne de la virole de la machine tournante qui peut être notamment un four rotatif, un sécheur, une diffusion de sucrerie, un broyeur à galets ou un broyeur à boulets notamment.

Ledit procédé comprend les étapes suivantes, pour la mise en oeuvre de l'usinage d'une dent 4 :
- fixer ledit dispositif d'usinage 1 à la couronne 3 par l'action de serrage de parties 12,12' solidaires du châssis du dispositif d'usinage, coopérant avec les flancs de la couronne 3,
- définir la position dudit dispositif d'usinage 1 par rapport à la dent à usiner 4 par appui sur le flanc 42 ; 42' d'une dent de référence, le flanc 42, 42' étant situé, par rapport au sommet 43; 43' de la dent de référence, de direction opposée au flanc 41 de la dent à usiner 4, la dent de référence étant la dent à usiner 4, ou encore une dent 4' immédiatement précédente,
- réaliser l'usinage du flanc 41 de la dent à usiner 4 par la commande de l'organe de coupe 15 selon des opérations d'usinage prédéterminées.

Les parties de serrage 12,12' sont déplaçables sur le châssis 11, et peuvent être rapprochées l'une de l'autre, suivant une direction perpendiculaire au plan de la couronne, pour obtenir le serrage des deux flancs de la couronne, par tout système adapté tel que système vis-écrou, actionneur hydraulique ou autre. Ces parties de serrage 12, 12' peuvent permettre également, par les appuis créés sur les flancs de la couronne, de définir la position du dispositif selon une direction perpendiculaire au plan de la couronne, à savoir la direction selon OX sur les repères des figures.

Selon un mode de réalisation avantageux, la fixation et le blocage du châssis 11 sur la couronne 3 sont assurés uniquement par l'action de serrage des parties 12, 12' sur les flancs de la couronne 3, et les frottements entre ces parties 12,12' et les flancs de la couronne. Dans ce cas, aucune disposition supplémentaire n'est nécessaire pour assurer la fixation et le blocage du dispositif. Une telle simplicité de fixation est ici recherchée en ce que, et pour réparer l'ensemble des dents de la couronne, il est nécessaire de déplacer à maintes reprises le dispositif en différentes positions de fixation associées respectivement à la réparation des différentes dents de la couronne. La manière dont le dispositif d'usinage peut être déplacé sur la couronne, permettant de réparer l'ensemble des dents est décrit dans une demande internationale PCT déposée le même jour par la Demanderesse, ainsi que dans la demande de brevet française FR 15 52197 du 17 mars 2015; le contenu de ces demandes est introduit par référence.

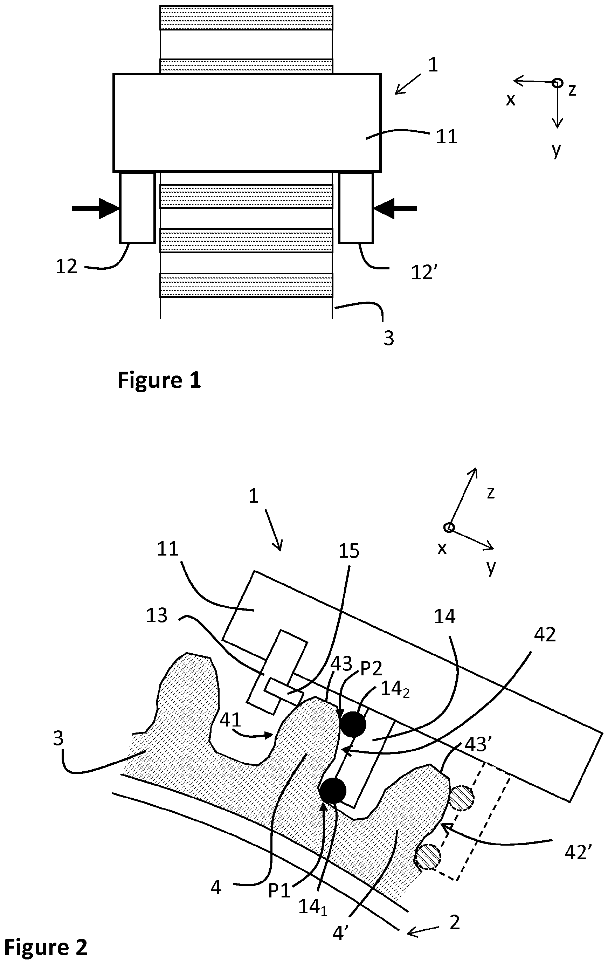

L'étape de définition de la position dudit dispositif d'usinage 1 par rapport à la dent à usiner 4 est obtenue par appui sur le flanc 42 ; 42' d'une dent de référence. Ce flanc 42, 42' est situé, par rapport au sommet 43; 43' de la dent de référence, de direction opposée au flanc 41 de la dent à usiner 4. Le procédé de réparation se destinant principalement à des couronnes dentées montées sur des machines tournantes entrainées dans un seul sens de rotation, le flanc de la dent de référence sur lequel on réalise l'appui est avantageusement un flanc n'ayant pas subi d'usure. La dent de référence peut être la dent à usiner 4, ou encore une dent 4' immédiatement précédente, tel qu'illustré à la figure 2.

Selon un mode de réalisation, cette étape peut mettre en oeuvre un premier appui P1, inférieur, et un deuxième appui P2, supérieur, de positions décalées en hauteur sur le flanc 42 ; 42' de la dent de référence 4 ; 4'.

A cet effet, le dispositif d'usinage comprend des moyens d'appui 14 sur le flanc de la dent de référence 4 ;4' qui peuvent comprendre au moins un premier organe d'appui 14₁ et un second organe d'appui 14₂, distincts, destinés à réaliser respectivement un premier appui P1 inférieur, et un deuxième appui P2 supérieur, de positions décalées en hauteur sur le flanc de la dent.

Selon un mode de réalisation, le premier appui P1, inférieur, sur le flanc 42 ; 42' de la dent de référence est mis en oeuvre par un organe d'appui, en l'espèce ledit premier organe d'appui 14₁, en appui simultané contre la base de la dent de référence 4 ;4'.

D'une manière générale, l'étape de définition du dispositif par appui sur le flanc de la dent de référence permet de connaître la position du dispositif dans un plan parallèle au plan de la couronne, à savoir le plan OYZ selon le repère des figures.

Selon un mode de réalisation, les seuls appuis de positionnement et de fixation du dispositif avec la couronne dentée sont constitués par les appuis des parties de serrage 12,12' sur les flancs de la couronne dentée pour assurer la fixation du dispositif, et le ou les appui(s) des moyens d'appui 14 sur le flanc de la dent de référence, de direction opposée au flanc de la dent à usiner 4.

Selon un mode de réalisation, l'usinage peut être un fraisage, ou encore un meulage. Il peut encore s'agir d'un rabotage, par la mise en oeuvre d'un mouvement alternatif de l'organe de coupe 15.

L'usinage du flanc 41 de la dent à usiner 4 est réalisé par la commande de l'organe de coupe 15 selon des opérations d'usinage prédéterminées. A cet effet, des moyens de contrôle et de commande sont aptes à piloter automatiquement l'organe de coupe pour réaliser l'usinage de la dent selon un profil déterminé, à l'aide de divers actionneurs.

Ces moyens de contrôle et de commande peuvent comprendre une mémoire dans laquelle sont enregistrées, sous forme numérique, des opérations d'usinage de la dent selon ledit profil déterminé. Ces instructions numériques d'usinage sont créées pour chaque couronne avant le début de l'usinage, en fonction des dimensions de la couronne, du module de la denture et de l'état d'usure. Il permet de reproduire pour chaque dent, et de façon automatique, un profil parfaitement identique. Une fois que la dent à usiner 4 est retaillée, le châssis du dispositif est desserré, déplacé d'un pas, et fixé de nouveau à la couronne dans le but de retailler la dent suivante de la couronne.

Les degrés de liberté de l'outil de coupe permettent le retaillage de la dent à usiner selon un profil de dent souhaité, et en particulier un profil de dent épicycloïdale. A cet effet, la partie mobile 13 peut être déplaçable suivant plusieurs axes, en particulier suivant l'axe OX, à savoir transversalement à la couronne 3, suivant l'axe OY, à savoir suivant une direction parallèle au plan de la couronne et perpendiculaire à la direction radiale passant par la dent à usiner 4, et suivant la direction OZ à savoir sensiblement suivant la direction radiale passant par la dent à usiner 4. L'organe de coupe 15 peut encore être orientable par rapport à la partie mobile, par exemple suivant un axe de rotation parallèle à l'axe OX.

Naturellement d'autres modes de réalisation auraient pu être envisagés sans pour autant sortir du cadre de l'invention tel que défini par les revendications ci-après.

### NOMENCLATURE

1. Dispositif d'usinage,
2. Support (par exemple machine tournante),
3. Couronne dentée,
4. Dent à usiner,
4'. Dent de référence (lorsque différente de celle à usiner), 11. Châssis,
12. 12'. Parties de serrage,
13. Partie mobile, par exemple chariot,
14. Moyens d'appui sur la dent de référence,
15. Organe de coupe,
41. Flanc de la dent à usiner,
42. Flanc de la dent de référence, appartenant à la dent à usiner, de direction opposée au flanc à usiner,
42'. Flanc de la dent de référence, de direction opposée au flanc à usiner, constituée par une dent précédente de la dent à usiner,
43. Sommet de la dent à usiner,
43'. Sommet de la dent de référence, constituée par une dent précédente de la dent à usiner
P1. Premier appui inférieur
P2. Second appui supérieur

## Revendications

1. Procédé de réparation de la denture d'une couronne (3) au moyen d'un dispositif d'usinage (1) comprenant un châssis (11) et une partie mobile (13) portant un organe de coupe (15) déplaçable suivant plusieurs axes par rapport au châssis (11), ledit procédé étant mis en oeuvre sur site, sans démontage de la couronne de son support (2), ledit procédé comprenant les étapes suivantes, pour la mise en oeuvre de l'usinage d'une dent (4) :
- fixer ledit dispositif d'usinage (1) à la couronne (3) par l'action de serrage de parties (12,12') solidaires du châssis du dispositif d'usinage, coopérant avec les flancs de la couronne (3),
- définir la position dudit dispositif d'usinage (1) par rapport à la dent à usiner (4) par appui sur le flanc (42 ; 42') d'une dent de référence, le flanc (42, 42') étant situé, par rapport au sommet (43; 43') de la dent de référence, de direction opposée au flanc (41) de la dent à usiner (4), la dent de référence étant la dent à usiner (4), ou encore une dent (4') immédiatement précédente,
- réaliser l'usinage du flanc (41) de la dent à usiner (4) de manière automatisée par la commande de l'organe de coupe (15) selon des opérations d'usinage prédéterminées enregistrées, sous forme numérique, dans une mémoire ;
et dans lequel ladite étape de définition de la position dudit dispositif d'usinage par rapport à la dent à usiner (4) met en oeuvre un premier appui (P1) inférieur, et un deuxième appui (P2) supérieur, de positions décalées en hauteur sur le flanc (42 ; 42') de la dent de référence (4 ; 4').

2. Procédé selon la revendication 1, dans lequel le premier appui (P1), inférieur, sur le flanc (42 ; 42') de la dent de référence est mis en oeuvre par un organe d'appui (14₁) en appui simultané contre la base de la dent de référence (4 ;4').

3. Procédé selon la revendication 1 ou la revendication 2, dans lequel la dent de référence est la dent à usiner (4).

4. Procédé selon l'une des revendications 1 à 3, dans lequel les opérations d'usinage sont un rabotage par la mise en oeuvre d'un mouvement alternatif de l'organe de coupe (15).

5. Procédé selon l'une des revendications 1 à 4, dans lequel la fixation et le blocage du châssis (11) sur la couronne (3) sont assurés uniquement par l'action de serrage des parties (12, 12') sur les flancs de la couronne (3).

6. Procédé selon l'une des revendications 1 à 5, dans lequel les opérations d'usinage prédéterminées reproduisent un profil de dent d'une denture épicycloïdale.

7. Equipement comprenant un dispositif d'usinage (1), destiné à l'usinage d'une couronne (3) dentée, convenant pour un usinage sur site, sans démontage de la couronne dentée, ledit dispositif d'usinage (1) comprenant un châssis (11) et une partie mobile (13) portant un organe de coupe (15), déplaçable suivant plusieurs axes, ledit dispositif comprenant :
- des parties de serrage (12,12'), solidaires du châssis (11), aptes à s'étendre de part et d'autre de la couronne (3), déplaçable par rapport au châssis, et convenant pour fixer et bloquer le châssis par serrage des flancs de la couronne (3),
- des moyens d'appui (14) sur le flanc d'une dent de référence, situés par rapport au sommet (43 ;43') de la dent de référence, de direction opposée au flanc (41) de la dent à usiner (4), la dent de référence étant la dent à usiner (4), ou encore une dent (4') immédiatement précédente ou encore suivante,
et dans lequel ledit équipement comprend des moyens de contrôle et de commande aptes à piloter automatiquement l'organe de coupe pour réaliser l'usinage de la dent selon un profil déterminé, comprenant une mémoire dans laquelle sont enregistrées, sous forme numérique, les opérations d'usinage de la dent selon ledit profil déterminé,
et dans lequel les moyens d'appui (14) sur le flanc de la dent de référence (4 ;4') comprennent un premier organe d'appui (14₁) et un second organe d'appui (14₂), destinés à réaliser respectivement un premier appui (P1) inférieur, et un deuxième appui (P2) supérieur, de positions décalées en hauteur sur le flanc de la dent.

8. Equipement selon la revendication 7, dans lequel le premier appui (P1) inférieur est agencé de manière à appuyer simultanément contre la base de la dent.

9. Équipement selon l'une des revendications 7 ou 8, dans lequel lesdits moyens d'appui (14) sur le flanc d'une dent de référence, sont agencés par rapport au châssis et à l'organe de coupe (15) de manière à coopérer avec la dent à usiner (4).

## Patentansprüche

1. Verfahren zur Reparatur der Zähne eines Zahnkranzes (3) mittels einer Bearbeitungsvorrichtung (1), umfassend einen Rahmen (11) und einen bewegbaren Teil (13), der ein Schneidelement (15) trägt, das gemäß mehreren Achsen in Bezug auf den Rahmen (11) verschiebbar ist, wobei das Verfahren in situ durchgeführt wird, ohne den Zahnkranz von seinem Träger (2) zu demontieren, wobei das Verfahren die folgenden Schritte zur Durchführung der Bearbeitung eines Zahns (4) umfasst:
- Befestigen der Bearbeitungsvorrichtung (1) an dem Zahnkranz (3) durch eine Klemmwirkung von Teilen (12, 12'), die fest mit dem Rahmen der Bearbeitungsvorrichtung verbunden sind, im Zusammenwirken mit den Flanken des Zahnkranzes (3),
- Definieren der Position der Bearbeitungsvorrichtung (1) in Bezug auf den zu bearbeitenden Zahn (4) durch Anlage an einer Flanke (42; 42') eines Referenzzahns, wobei die Flanke (42, 42'), in Bezug auf den Scheitel (43; 43') des Referenzzahns, in einer Richtung entgegengesetzt zu einer Flanke (41) des zu bearbeitenden Zahns (4) angeordnet ist, wobei der Referenzzahn der zu bearbeitende Zahn (4) ist, oder auch ein unmittelbar vorhergehender Zahn (4'),
- Durchführen der Bearbeitung der Flanke (41) des zu bearbeitenden Zahns (4) auf automatisierte Weise durch die Steuerung des Schneidelements (15) gemäß vorherbestimmten Bearbeitungsvorgängen, die, in numerischer Form, in einem Speicher gespeichert sind;
und wobei der Schritt des Definierens der Position der Bearbeitungsvorrichtung in Bezug auf den zu bearbeitenden Zahn (4) eine erste untere Anlage (P1) und eine zweite obere Anlage (P2) mit in der Höhe versetzten Positionen an der Flanke (42; 42') des Referenzzahns (4; 4') vornimmt.

2. Verfahren nach Anspruch 1, wobei die erste untere Anlage (P1) an der Flanke (42; 42') des Referenzzahns durch ein Anlageelement (14₁) in gleichzeitiger Anlage gegen die Basis des Referenzzahns (4; 4') vorgenommen wird.

3. Verfahren nach Anspruch 1 oder Anspruch 2, wobei der Referenzzahn der zu bearbeitende Zahn (4) ist.

4. Verfahren nach einem der Ansprüche 1 bis 3, wobei die Bearbeitungsvorgänge ein Hobeln durch Vornehmen einer alternativen Bewegung des Schneidelements (15) sind.

5. Verfahren nach einem der Ansprüche 1 bis 4, wobei die Fixierung und Blockierung des Rahmens (11) auf dem Zahnkranz (3) nur durch die Klemmwirkung der Teile (12, 12') auf die Flanken des Zahnkranzes (3) sichergestellt werden.

6. Verfahren nach einem der Ansprüche 1 bis 5, wobei die vorherbestimmten Bearbeitungsvorgänge ein Zahnprofil einer Planetenverzahnung reproduzieren.

7. Ausrüstung, umfassend eine Bearbeitungsvorrichtung (1), die zur Bearbeitung eines Zahnkranzes (3) bestimmt ist, und für eine Bearbeitung in situ ohne Demontage des Zahnkranzes geeignet ist, wobei die Bearbeitungsvorrichtung (1) einen Rahmen (11) und einen beweglichen Teil (13) umfasst, der ein Schneidelement (15) trägt, das gemäß mehreren Achsen verschiebbar ist, wobei die Vorrichtung umfasst:
- Befestigungsteile (12, 12'), die fest mit dem Rahmen (11) verbunden sind, geeignet sind, sich auf beiden Seiten des Zahnkranzes (3) zu erstrecken, in Bezug auf den Rahmen verschiebbar sind, und geeignet sind, den Rahmen durch Befestigen der Flanken des Zahnkranzes (3) zu befestigen und zu blockieren,
- Anlagemittel (14) an den Flanken eines Referenzzahns, die in Bezug auf den Scheitel (43; 43') des Referenzzahns in einer Richtung entgegengesetzt zur Flanke (41) des zu bearbeitenden Zahns (4) angeordnet ist, wobei der Referenzzahn der zu bearbeitende Zahn (4) ist, oder auch ein unmittelbar vorhergehender oder auch folgender Zahn (4'),
und wobei die Ausrüstung Kontroll- und Steuermittel umfasst, die geeignet sind, automatisch das Schneidelement zu steuern, um die Bearbeitung des Zahns gemäß einem bestimmten Profil durchzuführen, umfassend einen Speicher, in dem, in numerischer Form, die Bearbeitungsvorgänge des Zahns gemäß dem bestimmten Profil gespeichert sind,
und wobei die Anlagemittel (14) an der Flanke des Referenzzahns (4; 4') ein erstes Anlageelement (14₁) und ein zweites Anlageelement (14₂) umfassen, die dazu bestimmt sind, jeweils eine erste untere Anlage (P1) und eine zweite obere Anlage (P2) mit in der Höhe versetzten Positionen an der Flanke des Zahns vorzunehmen.

8. Ausrüstung nach Anspruch 7, wobei die erste untere Anlage (P1) derart angeordnet ist, dass sie gleichzeitig gegen die Basis des Zahns anliegt.

9. Ausrüstung nach einem der Ansprüche 7 oder 8, wobei die Anlagemittel (14) an der Flanke eines Referenzzahns in Bezug auf den Rahmen und auf das Schneidelement (15) derart angeordnet sind, dass sie mit dem zu bearbeitenden Zahn (4) zusammenwirken.

## Claims

1. Method for repairing the teeth of a ring gear (3) by means of a machining device (1) comprising a frame (11) and a moving part (13) bearing a cutting member (15) that can be moved along a plurality of axes with respect to the frame (11), said method being implemented in-situ without dismantling the ring gear from the support (2) thereof, said method comprising the following steps for implementing the machining of a tooth (4):
- attaching said machining device (1) to the ring gear (3) by the action of tightening parts (12, 12') rigidly attached to the frame of the machining device, engaging with the flanks of the ring gear (3),
- defining the position of said machining device (1) with respect to the tooth to be machined (4) by bearing on the flank (42; 42') of a reference tooth, the flank (42, 42') being situated, with respect to the crest (43; 43') of the reference tooth, facing the opposite direction to the flank (41) of the tooth to be machined (4), the reference tooth being the tooth to be machined (4) or an immediately preceding tooth (4'),
- performing the machining of the flank (41) of the tooth to be machined (4) in an automated manner by control of the cutting member (15) according to predetermined machining operations recorded, in digital form, in a memory;
and wherein said step for defining the position of said machining device with respect to the tooth to be machined (4) implements a first lower bearing (P1) and a second upper bearing (P2), the positions of which are offset in height along the flank (42; 42') of the reference tooth (4; 4').

2. Method according to claim 1, wherein the first lower bearing (P1) on the flank (42; 42') of the reference tooth is produced by a bearing member (14₁) simultaneously bearing against the base of the reference tooth (4; 4').

3. Method according to either claim 1 or claim 2, wherein the reference tooth is the tooth to be machined (4).

4. Method according to one of claims 1 to 3, wherein the machining operations involve planing by implementing an alternating movement of the cutting member (15).

5. Method according to one of claims 1 to 4, wherein the frame (11) is attached to and locked in place on the ring gear (3) solely by the action of tightening parts (12, 12') on the flanks of the ring gear (3).

6. Method according to one of claims 1 to 5, wherein the predetermined machining operations reproduce a tooth profile of an epicyclic toothing.

7. Equipment comprising a machining device (1), intended to machine a toothed ring gear (3), suitable for in-situ machining, without dismantling the toothed ring gear, said machining device (1) comprising a frame (11) and a moving part (13) bearing a cutting member (15) that can be moved along a plurality of axes, said device comprising:
- tightening parts (12, 12'), rigidly attached to the frame (11), capable of extending on either side of the ring gear (3), capable of moving with respect to the frame, and suitable for attaching and locking the frame by tightening of the flanks of the ring gear (3),
- bearing means (14) for bearing on the flank of a reference tooth, situated, with respect to the crest (43; 43') of the reference tooth, facing the opposite direction to the flank (41) of the tooth to be machined (4), the reference tooth being the tooth to be machined (4) or an immediately preceding or subsequent tooth (4'),
and wherein said equipment comprises instrumentation and control means capable of automatically controlling the cutting member in order to machine the tooth according to a determined profile, comprising a memory in which the machining operations of the tooth according to said determined profile are recorded in digital form,
and wherein the bearing means (14) for bearing on the flank of the reference tooth (4; 4') comprise a first bearing member (14₁) and a second bearing member (14₂), intended to respectively produce a first lower bearing (P1) and a second upper bearing (P2), the positions of which are offset in height over the flank of the tooth.

8. Equipment according to claim 7, wherein the first lower bearing (P1) is arranged so as to simultaneously bear against the base of the tooth.

9. Equipment according to either claim 7 or claim 8, wherein said bearing means (14) for bearing on the flank of a reference tooth are arranged with respect to the frame and to the cutting member (15) so as to engage with the tooth to be machined (4).
